# EUROPEAN PATENT APPLICATION

(11) **EP 1 365 086 A2**
(43) Date of publication of application: **26.11.2003**
(21) Application number: 03253272.3
(22) Date of filing: 23.05.2003
(51) Int. Cl.: E04F 15/18

(54) **Combined sound and moisture vapor barrier sheet materials for flooring underlayment and construction applications**

(30) Priority: 24.05.2002 US 155574
(71) Applicant: SEALED AIR CORPORATION, Saddle Brook New Jersey 07663 (US)
(72) Inventor: Ramesh, Natarajan S., Grapevine 76051 (US); Vadhar, Parimal M., Greer,2South Carolina 29650 (US); Freundlich, Richard, New York, New York 10028 (US); Nwana, Rudy, Piscatawaym New Jersey 08854 (US)
(74) Representative: Bankes, Stephen Charles Digby

(57) **Abstract**

Flexible sheet materials (10) having a foam layer (16) and a film layer (18) of polymer materials, at least one of the layers being formed from a filled polymer resin composition containing filler material comprising 30% to 65% by weight of the composition. The filled resin composition includes an ethylene copolymer such as ethylene vinyl acetate and may include other polymers such as polyethylene. The film layer (18) serves a vapor barrier function. The layer having the filler provides a sound transmission loss. A preferred embodiment of an underlayment has a filler resin film layer (18) of 6 to 30 mils thickness and a polymer foam layer (16) of 75 mils thickness, the underlayment providing a sound transmission loss of at least about 2.5dB at 1000 Hz.

## Description

The present invention relates to flexible sheet materials such as polymer films, foams, and laminates thereof, useful as sound and moisture vapor barriers for flooring underlayment and other construction uses.

In the construction of flooring, a cushioning and/or barrier material is often interposed between the finish flooring material such as hardwood floor boards, carpeting, or the like, and the underlying subfloor. Such cushioning and/or barrier material, generally known as an underlayment, may be employed to provide resilient support to the overlying finish flooring material, to smooth over small bumps or other irregularities in the surface of the subfloor, to provide a moisture barrier between the subfloor and finish flooring material, and/or to reduce transmission of sound through the floor.

U.S. Patent Nos. 5,968,630 and 5,952,076 disclose a flooring underlayment consisting of a layer of polyethylene foam laminated to a polyethylene film. The patents describe a conventional practice of separately installing a polyethylene film layer on the subfloor, followed by a layer of polyethylene foam sheet, or vice versa. To improve on efficiency, the patents describe a lamination of polyethylene foam and polyethylene film that can be laid down in one step. The polyethylene foam layer is said to provide cushioning and sound reduction, while the polyethylene film layer is said to act as a vapor barrier. The preferred thickness for the film layer is said to be 5 mils, but can be between about 1 mil and about 10 mils.

Sound-deadening sheeting is also known from U.S. Patent No. 4,191,798. The sheeting is made from a filled thermoplastic resin composition. The composition comprises an ethylene interpolymer such as ethylene vinyl acetate and about 50%-90% by weight of filler. The sheeting is described as being useful for application to the back of automotive carpet to deaden sound, and can simultaneously serve as a moldable support for the carpet. The patent describes numerous examples of sheeting; nearly all of the examples have a thickness exceeding 50 mils, although one example of a 40 mil sheet is cited. The patent does not disclose any concern with impeding moisture vapor transmission through the sheet.

A number of considerations come into play when developing a sheet material to act as both a sound barrier and a moisture vapor barrier. From the standpoint of ease of use, it is desirable for the sheet material to be relatively light in weight on a unit area basis, so that rolls of the material can be readily handled by workers at the location of use. This consideration favors thinner sheet materials. In contrast, to enhance the sound transmission loss through the sheeting, greater mass per unit area is advantageous.

The present invention seeks to develop a sound and moisture vapor barrier sheet material, particularly for use as an underlayment, that is relatively light in weight per unit area but that provides good sound transmission loss. It was found that highly filled thermoplastic resin compositions provide good sound attenuation, but known commercially available compositions of this type cannot be made thin enough to be readily handled in the field without developing pinholes, which compromises the desired moisture vapor barrier function.

In accordance with one aspect of the present invention, a sheet material providing sound and moisture vapor barrier properties comprises a polymer foam layer for providing resilience and shock absorption, and a sound and moisture vapor barrier layer joined to one side of the polymer foam layer, the barrier layer being a film formed of a composition comprising thermoplastic polymer resin and about 10% to 65% by weight filler, more preferably about 30% to 65% filler, and most preferably about 40% to 65% filler. Preferably, the polymer resin and filler are selected to give the composition a specific gravity of at least about 1.8 and melt index of at least about 1, and more preferably a melt index of at least about 2. The barrier layer preferably has a thickness of about 6 to 30 mils, and more preferably about 10 to 30 mils.

In one embodiment, the barrier layer and/or the foam layer further includes a biocide, antimicrobial agent, or the like for inhibiting biological activity on the sheet material. Corrosion inhibitors can also be included in either or both of the foam and barrier layers to inhibit corrosion of metal surfaces that may be in prolonged contact with the sheet material.

Preferably, the barrier layer includes a portion extending beyond at least one edge of the foam layer to form a lip for adhering to another piece of the sheet material overlapping the lip. The lip can include an adhesive such as a pressure-sensitive adhesive covered by a release paper, or any other suitable type of material for adhering the lip to another piece of the sheet material.

A preferred composition for forming the barrier layer includes a polyolefin. More particularly, the composition preferably comprises an ethylene vinyl acetate resin blended with a polyolefin resin. Various polyolefins can be used. The filler preferably comprises about 40% to 65% by weight of the composition of the barrier layer.

In another aspect of the invention, a sheet material providing sound and moisture vapor barrier properties comprises a polymer foam layer providing resilient compressibility and sound transmission loss, and a polymer film layer joined to the foam layer to serve as a moisture vapor barrier. The foam layer is formed of a composition comprising a thermoplastic polymer resin and about 10% to 65% by weight filler, more preferably about 30% to 65% filler, most preferably about 40% to 65% filler. The polymer resin and filler are selected to give the composition a melt index of at least about 1, the composition being foamed by inclusion of a foaming agent. The foaming agent can comprise a chemical or physical blowing agent.

The polymer resin of the composition for forming the sound-deadening foam layer preferably comprises an ethylene vinyl acetate and polyolefin blend.

Preferably, the foam layer has a thickness of about 0.03 to 0.5 inch and the film layer has a thickness of about 1 to 5 mils.

In any of the embodiments of the invention, the composition for forming the sound-deadening layer can include a portion of recycled scrap resin. The scrap resin can comprise various polymers such polyethylene, ethylene vinyl acetate, or polyvinylidene chloride (PVDC). Generally, PVDC would be undesirable as a component of such a composition because upon heating to temperatures required for extruding, casting, or the like, the PVDC generates hydrochloric acid which would be corrosive. However, in accordance with the invention, the composition also includes a filler that tends to neutralize the acid. Thus, the presence of the filler enables PVDC-containing scrap resins to be included without deleterious effects.

Having thus described the invention in general terms, reference will now be made to the accompanying drawings, which are not necessarily drawn to scale, and wherein:
FIG. 1 shows a sheet material in accordance with an embodiment of the invention installed as a flooring underlayment;
FIG. 2 is a cross-sectional view on line 2-2 of FiG. 1;
FIG. 3 is a view similar to FIG. 2, depicting another embodiment of the invention;
FIG. 4 is a cross-sectional view showing an alternative embodiment of the invention; and
FIG. 5 is cross-sectional view of yet another embodiment of the invention.

The present invention now will be described more fully hereinafter with reference to the accompanying drawings, in which some but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

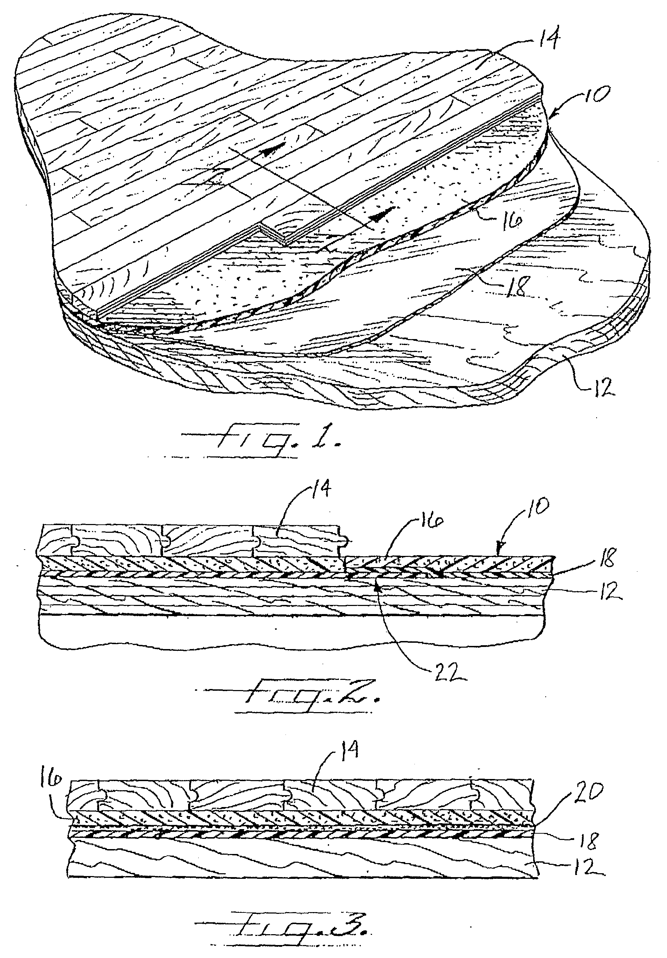

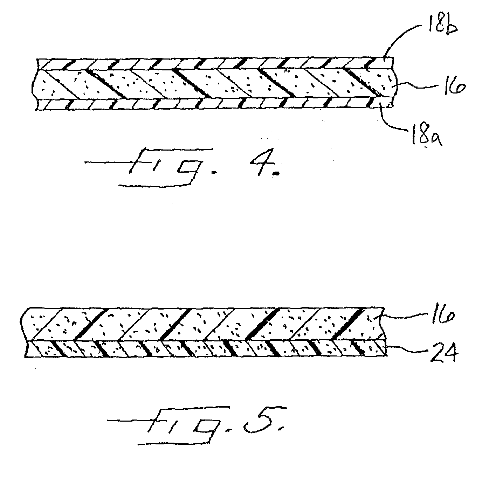

A sheet material **10** is shown in FIGS. 1 and 2 installed as a flooring underlayment. The sheet material **10** is laid atop a subfloor **12**. Finish flooring material, such as hardwood planks **14** or the like, is installed atop the sheet material **10.** In accordance with one embodiment of the invention, the sheet material **10** includes a foam layer **16** and a film layer **18** joined to one side of the foam layer. The sheet material **10** is shown installed with the foam layer **16** on top and the film layer **18** on bottom, but the layers alternatively can be reversed in position.

One of the functions performed by the foam layer **16** is to provide resilient compressibility to the sheet material so that the finish flooring **14** will "give" to some extent, thus improving the comfort for persons standing or walking on the flooring. The density and thickness of the foam layer can vary depending on the degree of compressibility desired.

The film layer **18** serves as a moisture vapor barrier to substantially reduce the rate of transmission of moisture vapor across the sheet material **10**.

The foam layer **16** and film layer **18** can be attached to each other in various ways. The two layers can be formed separately and then joined to each other by passing the layers through a compression nip, with an adhesive being applied between the facing surfaces of the layers, if necessary, to cause the layers to adhere to each other. Alternatively, as shown in FIG. 3, the layers can be joined via an intermediate tie layer **20,** such as by passing the three layers through a heated nip in which the tie layer is heated to a temperature at which the tie layer becomes tacky and adheres the foam layer **16** and film layer **18** to each other. Other methods for joining the foam and film layers can also be used, the invention not being limited to any particular method.

With reference to FIG. 2, when used as an underlayment, the sheet material **10** preferably includes an extended lip **22** formed by extending the film layer **18** beyond one edge of the foam layer **16.** The lip **22** can be overlapped by and adhered to another piece of the sheet material **10** so that a substantially continuous underlayment can be formed of a width exceeding that of the rolled sheet material **10.** The lip **22** preferably includes an adhesive material (not shown) for this purpose. The adhesive material can be of various types such a pressure-sensitive adhesive with a release paper that can be peeled off to expose the adhesive. It is also possible to use a heat-activatable adhesive that is substantially non-tacky at room temperature but becomes tacky when heated (e.g., a hot melt or the like). Yet another alternative is to coat the lip **22** with a cohesive material (i.e., a material that is non-tacky but can be adhered to itself by cold pressing) and to apply a strip of the cohesive to the exposed surface of the film layer **16** at the opposite longitudinal edge of the sheet material, so that when the film layer overlaps the lip **22** the two layers of cohesive are in contact and will adhere to each other upon application of pressure.

In accordance with the invention, at least one of the foam layer **16** and film layer **18** provides substantial sound transmission loss (STL) by incorporation of a substantial proportion of a filler material. Various filler materials can be used, including particulate mineral-based materials, fibrous materials, etc.

In a first aspect of the invention, the film layer **18** includes the filler. Incorporating the filler into the film layer **18** presents challenges, because the film layer **18** also serves as the moisture vapor barrier for the sheet material **10.** Films incorporating large proportions of filler are known, notably from the aforementioned U.S. Patent No. 4,191,798 and other patents of the same assignee, which describe ethylene interpolymer-based resins having 40% to 90% filler concentration. Ethylene vinyl acetate (EVA) compositions having about 50% to 80% filler (calcium carbonate and barium sulfate) by weight are commercially available from DuPont under the trademark KELDAX®. However, the present inventors have found that films extruded from such compositions at the upper end of the filler concentration range must be relatively thick, i.e., greater than 25 mils, or else pinholes tend to develop in the film during extrusion. This is unacceptable for present purposes because the film serves as a moisture vapor barrier, and pinholes compromise the barrier function- It has been found, however, that a highly filled polymer resin can be extruded to a thickness of less than 25 mils without developing pinholes by careful formulation of the composition as described below.

To determine the influence of composition on extrudability of films, a number of different filled EVA-based polymer resin compositions were prepared and were extruded in a sheet extruder having an 18-inch wide sheet die. A temperature of 325° F to 375° F was maintained in the extruder in all cases. The various compositions were prepared starting with KELDAX® 6868 resin from DuPont, which is believed to consist at least principally of an EVA resin, filler (calcium carbonate and barium sulfate), and a small amount of carbon black for coloring. The filler concentration is approximately 75% by weight. A number of compositions were prepared by blending low-density polyethylene (LDPE) into the KELDAX® resin in different proportions, and each composition was extruded in the sheet extruder to various thicknesses; the sheets were coextruded with a thin layer of high-density polyethylene (HDPE) to serve as a tie layer to facilitate lamination of the sheet to a polymer foam layer. The following Table I presents the various parameters of each test and the results obtained.

**Table I**

| KELDAX® Resin % | LDPE % | Filler wt.% | HDPE Tie Layer | Film Thickness | Observation |
|---|---|---|---|---|---|
| 1. 100% | 0% | 75% | 1 mil | 58 mils | Sheet too soft and significant buildup of composition on die lips |
| 2. 100% | 0% | 75% | 1 mil | 25 mils | Pinholes; not easy to process |
| 3. 80% | 20% | 60% | 1 mil | 58 mils | Excellent sheet; no pinholes |
| 4. 80% | 20% | 60% | 1 mil | 28 mils | Excellent sheet; no pinholes |
| 5. 80% | 20% | 60% | 1 mil | 13 mils | Excellent sheet; no pinholes |
| 6. 80% | 20% | 60% | 1.5 mil | 25 mils | Excellent sheet; no pinholes |
| 7. 80% | 20% | 60% | 1.5 mil | 12 mils | Excellent sheet; no pinholes, but could not go lower in thickness without developing pinholes |
| 8. 60% | 40% | 45% | 1.5 mil | 7 mils | Excellent sheet; no pinholes |

These results indicate that there is a correlation between the filler concentration and the lower limit on sheet thickness that can be achieved without developing pinholes. Based on these tests, it is believed that at a thickness of 6 mils, the maximum filler concentration that could be tolerated is about 40%; any greater filler concentration would likely result in pinholes starting to develop. At a filler concentration of 60%, a 25-mil sheet was readily extruded without pinholes but at 75% concentration the sheet could not be extruded down to a 25-mil thickness without pinholes. It is believed a filler concentration of as much as 65% could likely be used at 30 mils without pinholes developing, but risk of pinholes would likely creep in if the concentration were raised much about 65%. Thus, to preserve the moisture vapor barrier function of the film, a range of filler concentration of about 40% to 65% is preferred for films having a thickness of 6 to 30 mils. Of course, even lower filler concentrations could be used. Filler concentrations as low as 10% can be used; below this level the sound transmission loss provided by the film is not significant. More preferably, to achieve substantial sound attenuation the filler concentration should be at least about 30% by weight. To maximize the sound attenuation provided by the film it is desirable to use as high a filler concentration as possible while avoiding pinholes.

To determine the effect of film thickness on the sound transmission loss (STL) of a foam-film laminate of the type depicted in FIG. 3, the films of examples 3, 4, and 5 in Table I were heat-laminated via an intermediate 2-mil tie layer of LDPE to a 75-mil sheet of polyethylene foam (density of 2 pounds per cubic foot), and the resulting laminates were tested according to SAE standard test J1400-90 to measure the STL through the laminates. A control sample having the polyethylene foam and LDPE layer but lacking the filled resin film layer was also tested for comparison purposes. The results are presented below in Table II.

**Table II:**

| Sound Transmission Loss (STL) in dB | | | | |
|---|---|---|---|---|
| Frequency Hz | Control Sample | Foam with 13-mil Film | Foam with 28-mil Film | Foam with 58-mil Film |
| 250 | 0 | 0 | 3.2 | 10.3 |
| 315 | 0 | 0 | 4.7 | 10.7 |
| 400 | 0 | 0.6 | 6.8 | 11.7 |
| 500 | 0 | 2.6 | 8.8 | 15 |
| 630 | 0 | 4.6 | 10.7 | 15.9 |
| 800 | 0 | 6.6 | 12.9 | 18.5 |
| 1000 | 0 | 8.6 | 14.8 | 20.2 |
| 1250 | 0 | 10.5 | 16.9 | 21.6 |
| 1600 | 0 | 12.7 | 18.7 | 24.3 |
| 2000 | 0.3 | 14.6 | 20.3 | 26.9 |
| 2500 | 1.7 | 16.5 | 22.2 | 28.9 |
| 3150 | 3.7 | 18.5 | 24.5 | 30.2 |
| 4000 | 5.2 | 20.6 | 26.3 | 31.8 |
| 5000 | 7.1 | 22.6 | 28.3 | 33.0 |
| 6300 | 7.9 | 24.6 | 30.3 | 34.2 |
| 8000 | 8.9 | 26.6 | 32.5 | 35.4 |

The results demonstrate that adding the filled resin film to the foam layer dramatically improves the sound transmission loss of the structure. Not unexpectedly, the results show that increasing the thickness of the filled resin film increases the sound transmission loss. It is interesting to note that increasing the thickness from 13 to 28 mils (a 15-mil increase) provided a 5.7 db increase in STL at the mid-range frequency of 4000 Hz, while increasing the thickness from 28 mils to 58 mils (a 30-mil increase) provided an additional 5.5 db increase. Thus, it appears that the gains in STL tend to diminish with further increases in thickness of the film. In relation to the gain in STL achieved in adding a 58-mil film to the polyethylene foam (comparing columns 2 and 5 in Table II), a majority of this gain can be attained by adding a 13-mil thick film, thus saving considerable weight compared to the 58-mil film.

Accordingly, taking into account the objectives of sound attenuation, light weight per unit area, and moisture vapor barrier, preferred foam-film laminates in accordance with the invention should have a filled resin film layer having a thickness of about 6-30 mils and a filler concentration of at least about 10% but not greater than about 65% by weight. More preferably, the thickness should be about 10-30 mils and the filler concentration should be about 40-65%. A particularly preferred embodiment has a film layer of about 13 mils thickness and a filler concentration of about 60%.

As noted, various polymer resins can be used for making the filled resin film layer. The resulting filled resin composition preferably should have a melt index of at least about 1 g/10 minutes (measured according to ASTM Standard D1238), and more preferably at least about 2 g/10 minutes. A preferred resin is ethylene vinyl acetate because of its relatively high melt index and good flowability, which facilitates extruding or otherwise making relatively thin films. It is also possible, as demonstrated by the examples above, to use a blend of ethylene vinyl acetate with polyethylene. Other polyolefins can also be mixed with the ethylene vinyl acetate, such as polypropylene, polystyrene, etc.

It is also possible to employ a recycled scrap resin as part of the filled resin composition. The scrap resin can comprise various polymers such as polyethylene, ethylene vinyl acetate, or polyvinylidene chloride (PVDC); for instance, the scrap resin can include a PVDC-based film. Generally, PVDC would be undesirable as a component of such a composition because upon heating to temperatures required for extruding, casting, or the like, the PVDC generates hydrochloric acid which would be corrosive. However, in accordance with the invention, the composition also includes a filler (e.g., barium sulfate, calcium carbonate) that tends to neutralize the acid. Thus, the presence of the filler enables PVDC-containing scrap resins to be included without deleterious effects.

The filler used in the filled resin film layer can be of various types as already noted. Particulate fillers are preferred, suitable examples of which include calcium carbonate, barite (orthorhombic mineral form of barium sulfate), and others. Other types of fillers such as fibrous materials can also be used. It is preferred for the filler to comprise a mixture of two (or more) different filler materials of different specific gravity to help prevent agglomeration of the filler into clumps. A preferred filler comprises barium sulfate (having a specific gravity of about 2) mixed with calcium carbonate (specific gravity about 1.4).

The filled resin film can be made by various techniques known in the art, including extrusion, casting, or calendaring.

The foam layer **16** of the film-foam laminate sheet material **10** can be of various polymer materials. Suitable examples include polyethylene, polypropylene, polyurethane, and the like. The density and thickness of the foam layer can be varied depending on the objectives. For greater compressibility, a less dense foam can be used; higher density foams can be selected if less compressibility is desired. A preferred foam when used in a film-foam laminate for underlayment applications is a closed-cell polyethylene foam having a density of about 2 pounds per cubic foot. The thickness of the foam layer can range from about 0.03 inch to about 0.5 inch, although even greater thickness could be used if desired. For underlayment applications, the foam layer preferably has a thickness of about 0.05 to 0.25 inch, and a particularly preferred thickness is about 0.075 inch.

For floor underlayment applications, it is preferred to laminate the filled resin film to a layer of polymer foam as previously noted. However, in applications in which such compressibility is not required, the filled resin film layer can be used alone, or can be laminated with one or more other film layers for imparting other properties not possessed by the filled resin film layer.

The above-described embodiment of the sheet material **10** has the film layer **18** containing the filler, and the foam layer **16** is present mainly to provide resilient compressibility to the sheet material. In an alternative embodiment of the invention, the film layer **18** can be used mainly to provide a vapor barrier and the foam layer **16** can contain the filler and thus serve both to provide compressibility and to attenuate sound transmission through the sheet material. For example, the foam layer **16** can be a foamed layer of filled resin composition of the type previously described.

A series of laboratory experiments were conducted to determine how readily the filled resin composition can be foamed and continuously extruded. The experiments also sought to determine the effect of composition on foam density and strength. A number of compositions were prepared starting with KELDAX® 6868 resin and adding various proportions of LDPE (from zero to 40%) and Hydrocerol Grade CF-20 chemical blowing agent from Clariant Additives (from zero to 20%). The compositions were then extruded in a Haake twin-screw extruder through a 3 mm diameter capillary die to form a rod or strand. The sample density and cell count per inch were measured, and the propensity of the sample to break was assessed. The results are presented in Table III below.

**Table III:**

| Continuous Extrusion of Filled Resin with and without Foaming | | | | | | | |
|---|---|---|---|---|---|---|---|
| %KELDAX® 6868 Resin | %LDPE | %Blowing Agent | Output Rate g/minute | Melt Temp. °F | Die Pressure psi | Sample Density | Cells/inch |
| 100 | 0 | 0 | 19.1 | 300 | 1602 | 124.52 Sample breaks upon curing | n/a |
| 95 | 0 | 5 | 19.1 | 300 | 1602 | 122.70 | -- |
| 60 | 40 | 0 | 17.36 | 270 | 1232 | 94.16 Sample does not break | -- |
| 60 | 35 | 5 | 14.5 | 280 | 1218 | 75.13 | 108 |
| 60 | 30 | 10 | 18.61 | 261 | 1276 | 74.15 | 112 |
| 60 | 20 | 20 | 20.48 | 237 | 1307 | 64.88 | 127 |

The results indicate that the KELDAX® resin can readily be foamed in a continuous extrusion process. The KELDAX® resin alone (i.e., without added LDPE) yields an extrudate with a very low tear strength that would not be acceptable for a product that must be manipulated by workers in the field. However, addition of LDPE substantially improves the tear strength. Thus, the results indicate the viability of forming foam sheets of a highly filled resin composition such as ethylene vinyl acetate with polyethylene or other polymers added to improve the tear strength of the foam sheet.

Although a chemical blowing agent was used in the trials summarized above, other types of foaming agents such as physical blowing agents could instead be used. Although the lowest foam density achieved in the limited trials summarized above was about 65 lb/ft³, it is expected that foams of substantially lower density can be made, for example, as low as 1 lb/ft³.

In another test, a filled resin composition comprising 60% by weight KELDAX® 6868 resin, 37% by weight LDPE, and 3% by weight Hydrocerol Grade CF-20 chemical blowing agent from Clariant Additives was extruded in a sheet extruder at an extrusion temperature of 325° F to 350° F. The foam sheet was 14 inches wide and 13.5 mils thick. The measured density of the sheet was 87.25 lb/ft³. Thus, relatively thin foam layers of highly filled resin can be made in accordance with the invention.

In accordance with the invention, a foam sheet as described above can be laminated with a moisture vapor barrier film layer to form a film-foam structure such as shown in FIGS. 1 and 2, or can be laminated to the moisture vapor barrier film layer via an intermediate tie layer as shown in FIG. 3. In underlayment applications as illustrated, it is advantageous for the film layer to include an extending lip It is also possible to include filler in the film layer as well as in the foam layer, if desired.

Advantageously, the foam layer can be perforated with small through-going holes to facilitate escape of volatile blowing agents such as hydrocarbons so that there is no substantial residual blowing agent present at the time of laminating the foam layer to the film layer. The presence of such residual volatile blowing agents can cause delamination of the film to the foam as a result of the escape of the blowing agents upon heating during lamination. Normally, after the foam layer is made, it is allowed to "cure" for a period of time to allow the volatile blowing agents to fully vaporize and escape before the foam is laminated to the film. The through-going holes allow the "curing" time to be shortened by hastening the escape of the blowing agent.

It is possible to extrusion-coat one layer onto a previously prepared sheet of the other layer. For example, the foam layer **16** can be previously prepared, and the film layer **18** can be extrusion-coated directly onto the foam layer. Alternatively, the film layer can be previously prepared, and the foam layer can be extruded onto the film layer. As already noted, if needed for proper adhesion of the layers, an intermediate tie layer (e.g., LDPE or other material) can be included; for instance, the tie layer can be coated onto the previously prepared layer in advance of the extrusion-coating operation.

Additional layers can be included in the sheet material if desired. For instance, if additional moisture vapor barrier function is needed beyond that provided by the film-foam laminate, a further moisture barrier layer can be added to the structure (e.g., HDPE film, metallized film, foil, etc.).

A film-foam-film laminate can be made in accordance with the invention, as shown in FIG. 4. A foam layer **16** is sandwiched between a first film layer **18a** and a second film layer **18b.** One, two, or all layers of the laminate can include a filler. Furthermore, the invention is also applicable to structures such as film-foam-film-foam, film-foam-film-foam-film, foam-film-foam, and others.

Also within the scope of the invention are structures incorporating a foam layer and a sound-deadening foam layer formed as previously explained. FIG. 5 depicts an embodiment of such a laminate. The laminate includes a polymer foam layer **16,** which can be a relatively low-density foam (e.g., polyethylene having a density of about 2 lb/ft³), and a sound-deadening layer **24** of highly filled polymer resin that has been foamed by inclusion of a foaming agent. The sound-deadening foam layer **24** preferably is a relatively high-density foam in comparison with the foam layer **16.** For example, the foam layer **16** can have a density less than about 10 lb/ft³, and the sound-deadening foam layer **24** can have a density greater than about 20 lb/ft³. Of course, it will be recognized that the laminate of FIG. 5 can also include additional layers such as a film layer, etc.

A water vapor transmission rate (WVTR) test was conducted to assess the relative performance of one preferred film-foam laminate structure in accordance with the invention compared to a control sample. The film-foam laminate comprised a 75 mil layer of LDPE foam (2 lb/ft³), a 2 mil tie layer of LDPE film, and a 13.5 mil layer of filled resin film. The filled resin film was formed from a composition prepared as follows: A mixture was prepared comprising 22.66% by weight irradiated scrap resin (a mixture of various polyethylene resins and ethylene vinyl acetate resin) having a melt index of about 0.02 g/10 minutes, 13.65% by weight MV 02514 ethylene vinyl acetate resin from ExxonMobil Corporation (a medium-viscosity EVA resin, added for improving flowability of the composition), 1% by weight coloring agent, 60% by weight barite filler grade 20105 from Polar Minerals, and 2.69% by weight calcium carbonate. A composition was then prepared from 60% by weight of the above mixture and 40% by weight of LDPE. This composition was extruded into an 18-inch wide 13.5 mil thick sheet using a cast line. The sheet was then laminated with a 15-inch wide sheet of the polyethylene foam having the 2 mil tie layer coated thereon, such that a 3-inch long lip of the film extended beyond one edge of the foam. An adhesive with a release liner was applied to the lip.

The control sample included the 75 mil foam layer and the 2 mil tie layer, but did not have the 13.5 mil filled resin film layer.

The two samples were tested to determine their water vapor transmission rate (WVTR). The control sample was found to have a WVTR of 0.187 g/100 in²/24 hours at 100° F and 90% relative humidity. At the same conditions, the film-foam laminate in accordance with the invention was found to have a WVTR of 0.160 g/100 in²/24 hours (a 14.4% improvement). A sheet material in accordance with the invention preferably has a WVTR of less than about 0.2 g/100in²/24 hours, and more preferably less than about 0.18 g/100in²/24 hours at 100° F and 90% relative humidity.

The two samples were also tested (in accordance with ASTM Standard test D 3575-93 Suffix T) to measure their tensile strength in the machine direction (MD) and cross-machine direction (CMD). The control sample was measured to have an MD tensile strength of 281 psi, versus 551.1 psi for the film-foam laminate in accordance with the invention (a 96.1% increase). The CMD tensile strengths for the control and inventive samples were 164.2 psi and 397.8 psi, respectively (a 142.3% increase).

The two samples were also tested in accordance with SAE Standard test J1400-90 to determine their sound transmission loss (STL) and the results are presented in Table IV below:

**Table IV:**

| Sound Transmission Loss (STL) in dB | | | |
|---|---|---|---|
| Frequency, Hz | STL, dB Control | STL, dB Film-Foam Laminate | Improvement in STL, dB |
| 250 | 0 | 0 | 0 |
| 315 | 0 | 0 | 0 |
| 400 | 0 | 1 | +1 |
| 500 | 0 | 3.5 | +3.5 |
| 630 | 0 | 4.8 | +4.8 |
| 800 | 0 | 7.4 | +7.4 |
| 1000 | 0 | 9.2 | +9.2 |
| 1250 | 0 | 10.9 | +10.9 |
| 1600 | 0.8 | 13.1 | +12.3 |
| 2000 | 2.4 | 14.5 | +12.1 |
| 2500 | 4.6 | 16.4 | +11.8 |
| 3150 | 6.2 | 17.9 | +11.7 |
| 4000 | 7.8 | 19.9 | +12.1 |
| 5000 | 9.3 | 10.1 | +10.8 |
| 6300 | 10.9 | 20.4 | +9.5 |
| 8000 | 12.2 | 22.1 | +9.9 |

The film-foam laminate in accordance with the invention thus provided a substantial improvement in STL compared to the control sample. For applications of the sheet material as a flooring underlayment, the frequency range of greatest interest is about 200-2000 Hz; this is the range in which most of the normally encountered sounds fall. Over this range, the control sample provided virtually no sound transmission loss, except for a small attenuation at the upper end of the range. In contrast, the inventive film-foam laminate provided a significant sound transmission loss well down into the lower end of the range; at about the middle of range of interest, 1000 Hz, the control's STL was zero dB and the inventive laminate's STL was 9.2 dB. Sheet materials in accordance with the invention preferably have a sound transmission loss of at least about 2.5 dB and more preferably at least about 5.0 dB at about 1000 Hz.

The sound-deadening layer of the laminates in accordance with the invention preferably are formed of a filled resin composition having a specific gravity of at least about 1.8 and a melt index of at least about 1 g/10 minutes, more preferably a melt index of at least about 2 g/10 minutes.

The filled resin film or foam sheets in accordance with the invention can also include additives for imparting certain desirable properties thereto. For instance, in many applications where the sheet material serves as a vapor barrier, the material can be susceptible to fungal growth because of moist, dark conditions. Accordingly, in such cases, the filled resin sheet preferably includes a fungicide to inhibit fungal growth on the sheet. Other types of organic or metal-based biostabilizers or antimicrobials can also be included if desired. Examples of biostabilizers that can be used include 10,10'-oxy-bis-phenoxarsin, N-(trihalogenomethylthio)-phthalimide, diphenylstibine-2-ethylhexanoate, copper-bis-(8-hydroxyquinoline, tributyltin oxide and its derivatives, tri-n-butyltin maleate, and halogenated phenoxy compounds. A suitable commercially available bacteriostat that can be used is Sanitized® MBE-9765 from Clariant Additives (a halogenated phenoxy compound distributed in a polyethylene carrier).

One layer or more than one layer of the sheet materials in accordance with the invention can include a corrosion inhibitor for inhibiting corrosion of metal surfaces that may be in prolonged contact with the sheet material. Many organic-based or inorganic-based corrosion inhibitors suitable for incorporation into polymer resin compositions are known; one example is sodium nitrate.

Based on the foregoing, it will be appreciated that the invention provides unique sheet materials useful as an underlayment or otherwise useful in building construction and other applications. The sheet material simultaneously provides sound attenuation, a moisture vapor barrier function, and resilient compressibility. The material can be made relatively light in weight per unit area so as to be readily handled in roll form or in large sheets. Where the filled resin layer includes ethylene vinyl acetate or other thermoformable polymer, the resulting sheet material can be thermoformed into various shapes. This can be advantageous in applying the sheet material to non-flat surfaces; the sheet material can be thermoformed to conform to the contour of the surfaces to which it is applied.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A flooring underlayment providing sound barrier properties, comprising:
a first layer comprising polymer foam; and
a second layer joined to the first layer to form a multilayer sheet material;
wherein at least one of the layers comprises a polymer resin containing about 10% to 65% by weight filler.

2. The flooring underlayment of claim 1, wherein said at least one of the layers contains at least about 30% by weight filler.

3. The flooring underlayment of claim 1, wherein said at least one of the layers contains at least about 40% by weight filler.

4. The flooring underlayment of claim 1, wherein the filler comprises barite.

5. The flooring underlayment of claim 4, wherein the filler further comprises calcium carbonate.

6. The flooring underlayment of claim 1, wherein the sheet material has sufficient filler to provide at least about 2.5 dB sound transmission loss at 1000 Hz.

7. The flooring underlayment of claim 1, wherein the sheet material has sufficient filler to provide at least about 5 dB sound transmission loss at 1000 Hz.

8. The flooring underlayment of claim 1, wherein the second layer has the filler.

9. The flooring underlayment of claim 8, wherein the second layer comprises a film.

10. The flooring underlayment of claim 9, wherein the second layer includes a portion extending beyond at least one edge of the first layer to form a lip for adhering to another piece of the flooring underlayment overlapping the lip.

11. The flooring underlayment of claim 9, wherein the second layer has a thickness of about 6-30 mils.

12. The flooring underlayment of claim 8, wherein the second layer comprises a foam.

13. The flooring underlayment of claim 12, wherein the first layer has a substantially lower density than the second layer.

14. The flooring underlayment of claim 13, wherein the first layer has a density less than about 10 lb/ft³ and the second layer has a density greater than about 20 lb/ft³.

15. The flooring underlayment of claim 1, wherein the first layer has the filler.

16. The flooring underlayment of claim 15, wherein the second layer is a film.

17. The flooring underlayment of claim 1, wherein the second layer is a film and has the filler, the second layer having a melt index greater than about 1.0 and a density greater than about 1.8 g/cc, and wherein the flooring underlayment has a water vapor transmission rate less than about 0.2 g/100 in²/24 hours at 100° F and 90% relative humidity.

18. The flooring underlayment of claim 17, wherein the water vapor transmission rate of the flooring underlayment is less than about 0.18 g/100 in²/24 hours at 100° F and 90% relative humidity.

19. The flooring underlayment of claim 1, further comprising a third layer, the first layer being sandwiched between the second and third layers, each of the second and third layers comprising a polymer film.

20. A sheet material providing sound and moisture vapor barrier properties, comprising:
a polymer foam layer providing resilient compressibility; and
a sound and moisture vapor barrier layer joined to one side of the polymer foam layer, the barrier layer comprising a film formed of a composition comprising a thermoplastic polymer resin and about 10% to 65% by weight filler.

21. The sheet material of claim 20, wherein the barrier layer includes at least about 30% by weight filler.

22. The sheet material of claim 20, wherein the polymer resin and filler are selected to give the composition a melt index of at least about 2.

23. The sheet material of claim 20, wherein the barrier layer further includes an antimicrobial for inhibiting biological activity on the barrier layer.

24. The sheet material of claim 20, wherein the composition forming the barrier layer includes a polyolefin.

25. The sheet material of claim 20, wherein the composition forming the barrier layer comprises an ethylene vinyl acetate resin blended with a polyolefin resin.

26. The sheet material of claim 20, wherein the composition forming the barrier layer comprises an ethylene vinyl acetate resin blended with a polyethylene.

27. The sheet material of claim 20, wherein the composition forming the barrier layer comprises an ethylene vinyl acetate resin blended with a low-density polyethylene.

28. The sheet material of claim 20, wherein the filler comprises about 40% to 65% by weight of the composition of the barrier layer.

29. The sheet material of claim 20, wherein the foam layer is perforated with a plurality of through-going holes.

30. A sheet material providing sound and moisture vapor barrier properties, comprising:
a polymer foam layer providing resilient compressibility and sound transmission loss, the foam layer being formed of a composition comprising a thermoplastic polymer resin and about 10% to 65% by weight filler, the composition being foamed by inclusion of a foaming agent; and
a polymer film layer joined to the foam layer to serve as a moisture vapor barrier.

31. The sheet material of claim 30, wherein the foam layer includes about 30% to 65% by weight filler.

32. The sheet material of claim 30, wherein the polymer resin of the composition for forming the foam layer comprises an ethylene vinyl acetate and polyolefin blend.

33. The sheet material of claim 30, wherein the polymer resin of the composition for forming the foam layer comprises an ethylene vinyl acetate and polyethylene blend.

34. The sheet material of claim 30, wherein the film layer comprises a polyolefin.

35. The sheet material of claim 30, wherein the film layer comprises a polyethylene.

36. The sheet material of claim 30, wherein the foam layer has a thickness of about 0.03 to 0.5 inch and the film layer has a thickness of about 1 to 5 mils.

37. A sheet material providing sound and moisture vapor barrier properties, comprising:
a layer of polymer foam providing resilient compressibility; and
a barrier layer of film about 6 to 30 mils in thickness joined to the foam layer, the barrier layer being formed from a composition comprising ethylene vinyl acetate resin and filler and further comprising a polyolefin blended into the composition, the filler comprising about 10% to 65% by weight of the composition.

38. The sheet material of claim 37, wherein the polyolefin includes polyethylene.

39. The sheet material of claim 37, wherein the polyolefin includes low-density polyethylene.

40. The sheet material of claim 37, wherein the filler comprises a particulate mineral-based material.

41. The sheet material of claim 37, wherein the filler comprises a mixture of at least two different filler materials of substantially different specific gravities.

42. The sheet material of claim 37, wherein the barrier layer has a thickness of about 10 to 30 mils.

43. The sheet material of claim 42, wherein the barrier layer includes a portion that extends beyond one edge of the polymer foam layer to form a lip for adhering to another piece of the sheet material overlapping the lip.

44. The sheet material of claim 37, wherein the composition for forming the barrier layer further comprises an antimicrobial for inhibiting biological activity on the barrier layer.

45. A sheet material providing sound and moisture vapor barrier properties, comprising:
a polymer film layer providing a vapor barrier function; and
a layer of foam formed from a composition of a polymer resin containing an ethylene copolymer and a polyolefin and about 10% to 65% by weight of a filler.

46. The sheet material of claim 45, wherein the foam layer has a thickness of about .03 inch to about 0.5 inch.

47. The sheet material of claim 45, wherein the film layer has a thickness of about 1 mil to about 5 mils.

48. The sheet material of claim 45, wherein the foam layer has a thickness of about 0.05 inch to about 0.25 inch.

49. The sheet material of claim 45, wherein the composition for forming the foam layer further comprises an antimicrobial for inhibiting biological activity on the foam layer.

50. The sheet material of claim 49, wherein the ethylene copolymer comprises ethylene vinyl acetate.

51. The sheet material of claim 50, wherein the composition for forming the barrier layer further comprises low-density polyethylene.
